# EUROPEAN PATENT SPECIFICATION

(11) **EP 3 425 252 B1**
(45) Date of publication and mention of the grant of the patent: **11.08.2021**
(21) Application number: 18177753.3
(22) Date of filing: 14.06.2018
(51) Int. Cl.: F16L 27/08, F24C 3/00, F23K 5/00

(54) **GAS INTAKE CONNECTOR OF GAS COOKTOP AND GAS COOKTOP**
GASANSAUGSTUTZEN VON GASKOCHFELD UND GASKOCHFELD
CONNECTEUR D'ADMISSION DE GAZ DE TABLE DE CUISSON AU GAZ ET TABLE DE CUISSON AU GAZ

(30) Priority: 04.07.2017 CN 201720796536 U
(43) Date of publication of application: 09.01.2019
(73) Proprietor: BSH Hausgeräte GmbH, 81739 München (DE)
(72) Inventor: Cao, Meng, Nanjing (CN); Liu, Shenchang, Nanjing, 210000 (CN); Pan, Shuo, Nanjing (CN)

(56) References cited:
- EP-A2- 0 253 207
- JP-A- H 102 484
- JP-U- S 526 819
- JP-U- S4 966 775
- US-A1- 2013 255 819
- US-A1- 2016 102 794

## Description

### BACKGROUND

### Technical Field

This application relates to the technical field of gas cooktops, and in particular, to a gas intake connector of a gas cooktop and a gas cooktop.

### Related Art

US 2016/102794 A1 discloses a connector assembly for gas appliances. The connector assembly including two rotating direction. That is, a first screw pipe may rotate relative to a first pipe portion of a connecting pipe in the first rotating direction, and a second screw pipe may rotate relative to a second pipe portion of the connecting pipe in the second rotating direction which is different from the first rotating direction. It is easy to move the gas appliance relative to the gas supply and then prevents from gas leakage which results from the composite hose being twisted many times.

JP H10 2484 A discloses a gas cooking device exhibiting a high gas tightness and facilitating the attachment and detachment of a gas tube by applying a phenolresin or fluororesin coating to a gas seal surface with a rubber piping.

JP S52 6819 U and JP S49 66775 U disclose further examples of gas connectors.

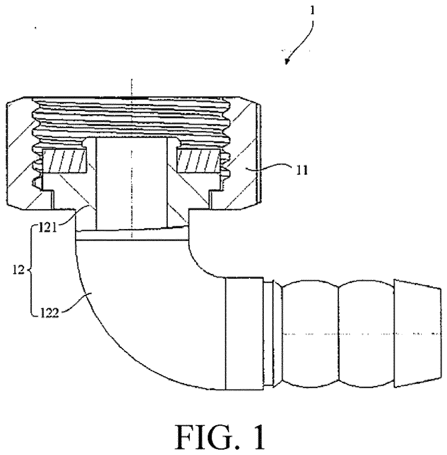

Currently, a structure of a gas intake connector 1 configured to connect a gas pipeline and a gas cooktop is shown in FIG. 1. The gas intake connector 1 includes a nut 11 and a connector portion 12, and the connector portion 12 includes a connection portion 121 and a tail portion 122. An inner thread of the nut 11 mates with an outer thread of the connection portion 121, and a main gas intake pipe mates with the inner thread of the nut 11 as well. In this way, a fixed connection between the connector portion 12 and the main gas intake pipe is implemented by using the nut 11. One end of a rubber hose is connected to the tail portion 122, and the other end of the rubber hose is connected to the gas pipeline. Gas in the gas pipeline enters the tail portion 122, then leaves the connection portion 121, enters the main gas intake pipe, and eventually enters the gas cooktop through the main gas intake pipe.

When an installer mounts the rubber hose, because relative positions of the gas pipeline and the gas cooktop are different, a direction of the tail portion 122 often needs to be adjusted by rotation to facilitate connection between the tail portion 122 and the rubber hose. However, as the tail portion 122 of the connector portion 12 is rotated for adjustment, the connection portion 121 of the connector portion 12 is driven to rotate along. Once the nut 11 and the connection portion 121 are tightened and secured, the connection portion 121 rotates relative to the nut 11 and the nut 11 and the connection portion 121 become loose, resulting in gas leakage at the connection portion 121.

### SUMMARY

A technical problem resolved by this application is how to ensure that a gas intake connector does not leak when the gas intake connector is rotated for adjustment.

To resolve the foregoing technical problem, this application provides a gas intake connector, including: a connector portion, where the connector portion includes a connection portion and a tail portion, the connection portion includes a cavity, and one end of the tail portion is configured to be connected to a rubber hose; and a nut, where the nut includes a head portion and a column portion, the column portion is mounted in the cavity of the connection portion, and the head portion is configured to be connected to a main gas intake pipe. An outer wall of the column portion is provided with a ring-shaped sealing slot in a circumferential direction, the ring-shaped sealing slot is provided with a sealing ring, the connection portion is provided with an opening formed through its circumferential wall, the outer wall of the column portion is provided with a first ring-shaped groove in the circumferential direction, a stop member is mounted in the opening, and the stop member extends into the first ring-shaped groove.

Optionally, the opening is a circular hole, and the stop member is a rivet.

Optionally, the opening is an arc-shaped opening, and the stop member is a ferrule.

Optionally, the outer wall of the column portion is provided with at least two ring-shaped sealing slots, and the sealing ring is an O-shaped sealing ring.

Optionally, the outer wall of the column portion is provided with a second ring-shaped groove in the circumferential direction, and a metal inner ring is mounted in the second ring-shaped groove.

Optionally, the gas intake connector further includes a metal outer ring, where the metal outer ring is sleeved on the head portion.

Optionally, the gas intake connector further includes a gas intake pipe connection member, where the gas intake pipe connection member is mounted between the head portion and the main gas intake pipe.

Optionally, the head portion is provided with an inner thread, one end of the gas intake pipe connection member is provided with an outer thread, and the head portion is sleeved on the end of the gas intake pipe connection member.

Optionally, the other end of the gas intake pipe connection member is sleeved on the main gas intake pipe.

Optionally, one end of the tail portion is provided with a gas exhaust pipe connection portion, and the rubber hose is sleeved on the gas exhaust pipe connection portion.

This application further provides a gas cooktop, including a gas intake connector according to any one of the foregoing optional implementations.

Compared with the prior art, the technical solution of this application has the following beneficial effects: This application provides a gas intake connector, including a connector portion and a nut, a column portion of the nut is mounted in a cavity of a connection portion of the connector portion, a tail portion of the connector portion is configured to be connected to a rubber hose, and a head portion of the nut is configured to be connected to a main gas intake pipe. An outer wall of the column portion is provided with a ring-shaped sealing slot in a circumferential direction, and the ring-shaped sealing slot is provided with a sealing ring. After the column portion is mounted in the cavity of the connection portion, the sealing ring can produce a desirable sealing effect between inner walls of the column portion and the connection portion, thus preventing gas leakage. The connection portion is provided with an opening formed through its circumferential wall, and the outer wall of the column portion is provided with a first ring-shaped groove in the circumferential direction. After the column portion is mounted in the cavity of the connection portion, the opening and the first ring-shaped groove are aligned, a stop member is mounted in the opening, and the stop member passes through the opening and extends into the first ring-shaped groove, so that the stop member can limit vertical movement of the nut. Even if a direction of the tail portion of the connector portion is adjusted by rotation, the nut and the connector portion are prevented from becoming loose, thus ensuring that the gas intake connector does not leak.

### BRIEF DESCRIPTION OF THE DRAWINGS

The disclosure will become more fully understood from the detailed description given herein below for illustration only, and thus are not limitative of the disclosure, and wherein:
FIG. 1 is a schematic front view of a gas intake connector in the prior art;
FIG. 2 is a schematic three-dimensional diagram of a gas intake connector according to an embodiment of this application, and a main gas intake pipe and a rubber hose are shown in the figure;
FIG. 3 is a sectional view of the gas intake connector in FIG. 2 in a direction A-A, and a metal outer ring is not shown in the figure;
FIG. 4 is a schematic diagram showing mounting of the gas intake connector in FIG. 2, and a metal outer ring is not shown in the figure; and
FIG. 5 is a schematic front view of the gas intake connector in FIG. 2, and a main gas intake pipe and a rubber hose are not shown in the figure.

### DETAILED DESCRIPTION

For the technical problems existing in the gas intake connector in the prior art, this application provides a gas intake connector. When the gas intake connector is rotated for adjustment, it is ensured that the gas intake connector does not leak.

To make the foregoing objectives, features, and beneficial effects of this application more comprehensible, the following describes in detail the specific embodiments of this application with reference to the accompanying drawings.

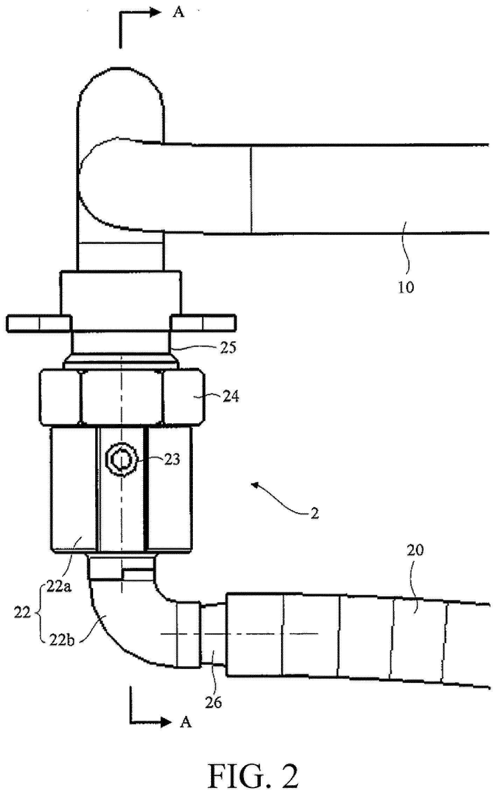

Referring to FIG. 2 to FIG. 4, FIG. 2 to FIG. 4 show a gas intake connector 2, including a nut 21 and a connector portion 22. The connector portion 22 includes two parts, specifically, a connection portion 22a and a tail portion 22b. The connection portion 22a includes a cavity, and one end of the tail portion 22b is configured to be connected to a rubber hose 20. The nut 21 includes two parts as well, specifically, a head portion 21a and a column portion 21b. The head portion 21a is configured to be connected to a main gas intake pipe 10. The column portion 21b of the nut 21 is mounted in a cavity of the connection portion 22a of the connector portion 22. In this way, assembling of the nut 21 and the connector portion 22 is completed.

An outer wall of the column portion 21b is provided with a ring-shaped sealing slot 203 in a circumferential direction, and the ring-shaped sealing slot 203 is provided with a sealing ring 211. After the column portion 21b is mounted in the cavity of the connection portion 22a, the sealing ring 211 is locked between the outer wall of the column portion 21b and a cavity wall of the connection portion 22a. The sealing ring 211 provides desirable gas-tightness between the nut 21 and the connector portion 22, thus preventing gas leakage. Specifically, in this embodiment, the nut 21 is provided with two ring-shaped sealing slots 203, and each ring-shaped sealing slot 203 is provided with one sealing ring 211. The sealing ring 211 is an O-shaped sealing ring. The two sealing rings 211 can produce a double sealing effect. In other embodiments, the nut may be provided with more than two ring-shaped sealing slots as well.

In addition, the connection portion 22a is provided with an opening 202 formed through a circumferential wall of the connection portion 22a, and the outer wall of the column portion 21b is provided with a first ring-shaped groove 201 in the circumferential direction. After the column portion 21b is mounted in the cavity of the connection portion 22a, the opening 202 on the connection portion 22a and the first ring-shaped groove 201 on the column portion 21b are aligned. A stop member 23 is mounted in the opening 202, and the stop member 23 extends into the first ring-shaped groove 201. In this way, the stop member 23 can limit the degree of freedom of the nut 21 relative to the connector portion 22 in a vertical direction, and the connector portion 22 can only rotate about a central axis of the nut 21. Therefore, even if an installer adjusts a direction of the tail portion 22b of the connector portion 22 by rotation, the nut 21 and the connector portion 22 are prevented from becoming loose, thus ensuring that the gas intake connector 2 does not leak.

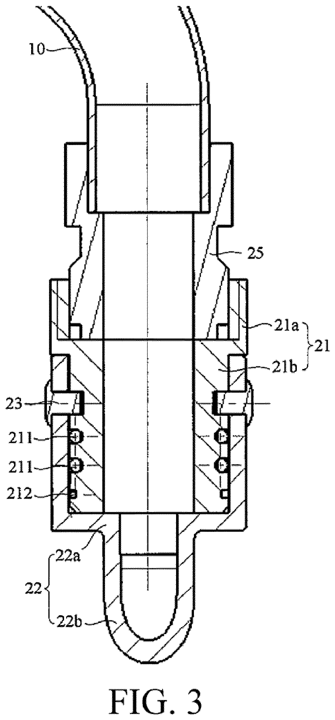

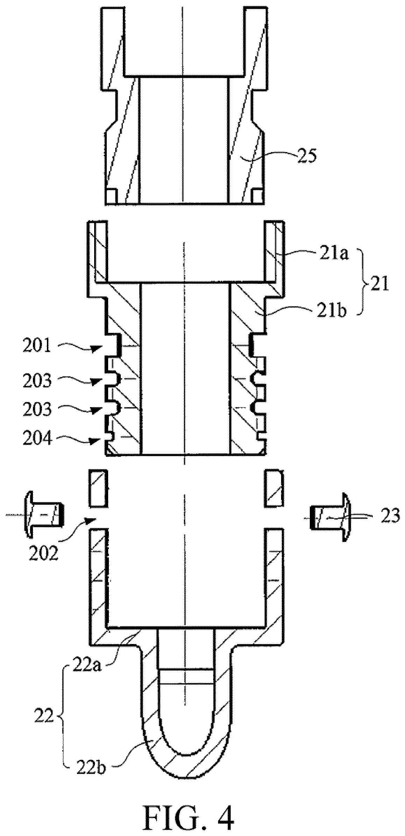

Referring to FIG. 3 and FIG. 4, in this embodiment, the opening 202 is provided as a circular hole, and the stop member 23 is a rivet. After the column portion 21b is mounted in the cavity of the connection portion 22a, the rivet is inserted into the opening 202. A head portion of the rivet abuts against the circumferential wall of the connection portion 22a, and a tail portion of the rivet extends into the first ring-shaped groove 201, thus limiting vertical displacement between the nut 21 and the connector portion 22. In this embodiment, the circumferential wall of the connection portion 22a is provided with two openings 202, a connection line between the two openings 202 is a radial direction of the cavity of the connection portion 22a. Each opening 202 is provided with one rivet. In other embodiments, the circumferential wall of the connection portion may be provided with more than two openings in a circumferential direction, each opening is provided with one rivet, and more rivets indicate a securer connection relationship between the nut and the connector portion.

In other embodiments, the opening may be provided as an arc-shaped opening extending in the circumferential direction of the connection portion, and the stop member is a ring-shaped ferrule. The ferrule is mounted in the arc-shaped opening. This can limit the degree of freedom of the nut relative to the connector portion in the vertical direction as well. The connector portion can only rotate about the central axis of the nut. The number of arc-shaped openings is not limited to one as well, the circumferential wall of the connection portion may be provided with more than one arc-shaped opening as well, one ferrule is mounted in each arc-shaped opening, and more ferrules indicate a securer connection relationship between the nut and the connector portion.

Still referring to FIG. 3 and FIG. 4, the outer wall of the column portion 21b is provided with a second ring-shaped groove 204 in the circumferential direction, and a metal inner ring 212 is mounted in the second ring-shaped groove 204. After the column portion 21b is mounted in the cavity of the connection portion 22a, the metal inner ring 212 is locked into the outer wall of the column portion 21b and the cavity wall of the connection portion 22a. The metal inner ring 212 increases friction between the column portion 21b and the connection portion 22a, so that the nut 21 cannot move upward easily relative to the connector portion 22, thus producing an auxiliary limiting effect.

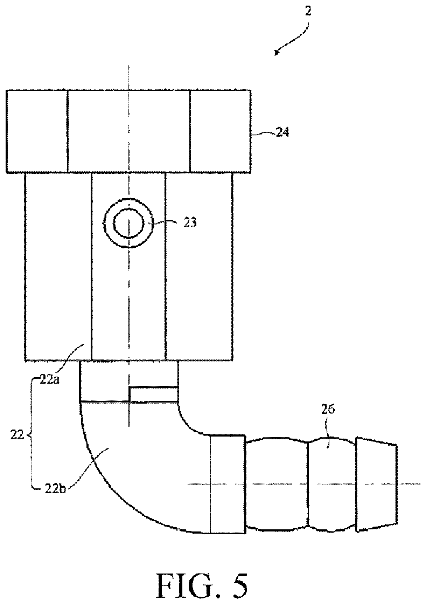

Referring to FIG. 5, the gas intake connector 2 further includes a metal outer ring 24. After the column portion 21b is mounted in the cavity of the connection portion 22a, the metal outer ring 24 is sleeved on the head portion 21a, and the metal outer ring 24 is moved downward, so that a joint between the head portion 21a and the connection portion 22a is located in an inner ring of the metal outer ring 24. Because the metal outer ring 24 is in interference fit with the head portion 21a, the metal outer ring 24 hoops the head portion 21a and the connection portion 22a at the joint between the head portion 21a and the connection portion 22a, so that relative displacement in the vertical direction is not easy to occur between the nut 21 and the connector portion 22.

Referring to FIG. 3 and FIG. 4, the gas intake connector 2 further includes a gas intake pipe connection member 25. The gas intake pipe connection member 25 is mounted between the head portion 21a and the main gas intake pipe 10. The head portion 21a is provided with an inner thread, one end of the gas intake pipe connection member 25 is provided with an outer thread, and the head portion 21a is sleeved on the end of the gas intake pipe connection member 25. The inner thread of the head portion 21a and the outer thread of the gas intake pipe connection member 25 are mated and clamped with each other, so that a fixed connection between the nut 21 and the gas intake pipe connection member 25 is implemented. The other end of the gas intake pipe connection member 25 is sleeved on the main gas intake pipe 10.

One end of the tail portion 22b of the connector portion 22 is provided with a gas exhaust pipe connection portion 26, and the gas exhaust pipe connection portion 26 is generally bottle-gourd-shaped. The rubber hose 20 is sleeved on the gas exhaust pipe connection portion 26. Because the gas exhaust pipe connection portion 26 is bottle-gourd-shaped, the rubber hose 20 is in interference fit with the gas exhaust pipe connection portion 26 at a cross section of the gas exhaust pipe connection portion 26 whose radius is the largest. In this way, a fixed connection between the rubber hose 20 and the gas intake connector 2 is implemented.

This application further provides a gas cooktop, including the foregoing gas intake connector 2. Because relative positions of a gas pipeline and a gas cooktop are different, when mounting the rubber hose 20, the installer may optionally adjust a direction of the gas exhaust pipe connection portion 26 on the tail portion 22b by rotation, to align the rubber hose 20 to be connected. When the gas exhaust pipe connection portion 26 is rotated for adjustment, the connection portion 22a of the connector portion 22 rotates relative to the column portion 21b of the nut 21. However, with the limit by the stop member 23 and the presence of the sealing ring 211, the connection portion 22a and the column portion 21b are prevented from becoming loose, and leakage of the gas intake connector 2 is prevented.

This application is disclosed as above, but this application is not limited thereto. Any person skilled in the art may make various variations or modifications without departing from the scope of the claims. Therefore, the protection scope of this application shall fall within the scope defined by the claims.

## Claims

1. A gas intake connector (2) of a gas cooktop, comprising:
a connector portion (22), wherein the connector portion (22) comprises a connection portion (22a) and a tail portion (22b), the connection portion (22a) comprises a cavity, and one end of the tail portion (22b) is configured to be connected to a rubber hose (20); and
a nut (21), wherein the nut (21) comprises a head portion (21a) and a column portion (21b), the column portion (21b) is mounted in the cavity of the connection portion (22a), and the head portion (21a) is configured to be connected to a main gas intake pipe (10), wherein
an outer wall of the column portion (21b) is provided with a ring-shaped sealing slot (203) in a circumferential direction, the ring-shaped sealing slot (203) is provided with a sealing ring (211),
the connection portion (22a) is provided with an opening (202) formed through its circumferential wall, the outer wall of the column portion (21b) is provided with a first ring-shaped groove (201) in the circumferential direction, a stop member (23) is mounted in the opening (202), and the stop member (23) extends into the first ring-shaped groove (201).

2. The gas intake connector according to claim 1, **characterized in that** the opening (202) is a circular hole, and the stop member (23) is a rivet.

3. The gas intake connector according to claim 1, **characterized in that** the opening (202) is an arc-shaped opening, and the stop member (23) is a ferrule.

4. The gas intake connector according to claim 1, **characterized in that** the outer wall of the column portion (21b) is provided with at least two ring-shaped sealing slots (203), and the sealing ring (211) is an O-shaped sealing ring.

5. The gas intake connector according to claim 1, **characterized in that** the outer wall of the column portion (21b) is provided with a second ring-shaped groove (204) in the circumferential direction, and a metal inner ring (212) is mounted in the second ring-shaped groove (204).

6. The gas intake connector according to claim 1, **characterized by** further comprising a metal outer ring (24), wherein the metal outer ring (24) is sleeved on the head portion.

7. The gas intake connector according to claim 1, **characterized by** further comprising a gas intake pipe connection member (25), wherein the gas intake pipe connection member (25) is mounted between the head portion (21a) and the main gas intake pipe (10).

8. The gas intake connector according to claim 7, **characterized in that** the head portion (21a) is provided with an inner thread, one end of the gas intake pipe connection member (25) is provided with an outer thread, and the head portion (21a) is sleeved on the end of the gas intake pipe connection member (25).

9. The gas intake connector according to claim 8, **characterized in that** the other end of the gas intake pipe connection member (25) is sleeved on the main gas intake pipe (10).

10. The gas intake connector according to claim 1, **characterized in that** one end of the tail portion (22b) is provided with a gas exhaust pipe connection portion (26), and the rubber hose (20) is sleeved on the gas exhaust pipe connection portion (26).

11. A gas cooktop, **characterized by** comprising a gas intake connector (2) according to any one of claims 1 to 10.

## Patentansprüche

1. Gasansaugstutzen (2) für eine Gaskochstelle mit Folgendem:
einem Stutzenabschnitt (22), wobei der Stutzenabschnitt (22) einen Verbindungsabschnitt (22a) und einen Endabschnitt (22b) umfasst, der Verbindungsabschnitt (22a) einen Hohlraum umfasst und ein Ende des Endabschnitts (22b) so konfiguriert ist, dass es sich mit einem Gummischlauch (20) verbinden lässt, und
einer Mutter (21), wobei die Mutter (21) einen Kopfabschnitt (21a) und einen Schaftabschnitt (21b) umfasst, der Schaftabschnitt (21b) in dem Hohlraum des Verbindungsabschnitts (22a) untergebracht und der Kopfabschnitt (21a) so konfiguriert ist, dass er sich mit einem Gasansaughauptrohr (10) verbinden lässt,
wobei
eine Außenwand des Schaftabschnitts (21b) in Umfangsrichtung mit einer ringförmigen Dichtungskerbe (203) versehen ist, die mit einem Dichtungsring (211) versehen ist,
der Verbindungsabschnitt (22a) mit einer Öffnung (202) versehen ist, die in seiner Umfangswand ausgebildet ist, wobei die Außenwand des Schaftabschnitts (21b) in Umfangsrichtung mit einer ersten ringförmigen Nut (201) versehen ist, ein Anschlagelement (23) in der Öffnung (202) untergebracht ist und sich das Anschlagelement (23) bis in die erste ringförmige Nut (201) hinein erstreckt.

2. Gasansaugstutzen nach Anspruch 1, **dadurch gekennzeichnet, dass** es sich bei der Öffnung (202) um ein kreisrundes Loch und bei dem Anschlagelement (23) um ein Niet handelt.

3. Gasansaugstutzen nach Anspruch 1, **dadurch gekennzeichnet, dass** es sich bei der Öffnung (202) um eine bogenförmige Öffnung und bei dem Anschlagelement (23) um eine Hülse handelt.

4. Gasansaugstutzen nach Anspruch 1, **dadurch gekennzeichnet, dass** die Außenwand des Schaftabschnitts (21b) mit mindestens zwei ringförmigen Dichtungskerben (203) versehen ist und es sich bei dem Dichtungsring (211) um einen O-förmigen Dichtungsring handelt.

5. Gasansaugstutzen nach Anspruch 1, **dadurch gekennzeichnet, dass** die Außenwand des Schaftabschnitts (21b) in Umfangsrichtung mit einer zweiten ringförmigen Nut (204) versehen und in der zweiten ringförmigen Nut (204) ein Metallinnenring (212) untergebracht ist.

6. Gasansaugstutzen nach Anspruch 1, **dadurch gekennzeichnet, dass** er ferner einen Metallaußenring (24) umfasst, wobei der Metallaußenring (24) auf den Kopfabschnitt aufgesteckt ist.

7. Gasansaugstutzen nach Anspruch 1, **dadurch gekennzeichnet, dass** er ferner ein Gasansaugrohrverbindungselement (25) umfasst, wobei das Gasansaugrohrverbindungselement (25) zwischen dem Kopfabschnitt (21a) und dem Gasansaughauptrohr (10) angebracht ist.

8. Gasansaugstutzen nach Anspruch 7, **dadurch gekennzeichnet, dass** der Kopfabschnitt (21a) mit einem Innengewinde und ein Ende des Gasansaugrohrverbindungselements (25) mit einem Außengewinde versehen und der Kopfabschnitt (21a) auf das Ende des Gasansaugrohrverbindungselements (25) aufgesteckt ist.

9. Gasansaugstutzen nach Anspruch 8, **dadurch gekennzeichnet, dass** das andere Ende des Gasansaugrohrverbindungselements (25) auf das Gasansaughauptrohr (10) aufgesteckt ist.

10. Gasansaugstutzen nach Anspruch 1, **dadurch gekennzeichnet, dass** ein Ende des Endabschnitts (22b) mit einem Abgasrohrverbindungsabschnitt (26) versehen und der Gummischlauch (20) auf den Abgasrohrverbindungsabschnitt (26) aufgesteckt ist.

11. Gaskochstelle, **dadurch gekennzeichnet, dass** sie einen Gasansaugstutzen (2) nach einem der Ansprüche 1 bis 10 umfasst.

## Revendications

1. Connecteur d'admission de gaz (2) d'une table de cuisson au gaz, comprenant :
une partie de connecteur (22), dans lequel la partie de connecteur (22) comprend une partie de connexion (22a) et une partie de queue (22b), la partie de connexion (22a) comprend une cavité, et une extrémité de la partie de queue (22b) est configurée pour être connectée à un tuyau en caoutchouc (20) ; et
un écrou (21), dans lequel l'écrou (21) comprend une partie de tête (21a) et une partie en colonne (21b), la partie en colonne (21b) est montée dans la cavité de la partie de connexion (22a), et la partie de tête (21a) est configurée pour être connectée à un conduit principal d'admission de gaz (10),
dans lequel
une paroi externe de la partie en colonne (21b) est munie d'une fente d'étanchéité à géométrie de bague (203) dans une direction circonférentielle, la fente d'étanchéité à géométrie de bague (203) est munie d'une bague d'étanchéité (211),
la partie de connexion (22a) est munie d'une ouverture (202) formée à travers sa paroi circonférentielle, la paroi externe de la partie en colonne (21b) est munie d'une première rainure à géométrie de bague (201) dans la direction circonférentielle, un organe de butée (23) est monté dans l'ouverture (202), et l'organe de butée (23) s'étend dans la première rainure à géométrie de bague (201).

2. Connecteur d'admission de gaz selon la revendication 1, **caractérisé en ce que** l'ouverture (202) est un trou circulaire, et l'organe de butée (23) est un rivet.

3. Connecteur d'admission de gaz selon la revendication 1, **caractérisé en ce que** l'ouverture (202) est une ouverture à géométrie en arc, et l'organe de butée (23) est une virole.

4. Connecteur d'admission de gaz selon la revendication 1, **caractérisé en ce que** la paroi externe de la partie en colonne (21b) est munie d'au moins deux fentes d'étanchéité à géométrie de bague (203), et la bague d'étanchéité (211) est une bague d'étanchéité à géométrie en O.

5. Connecteur d'admission de gaz selon la revendication 1, **caractérisé en ce que** la paroi externe de la partie en colonne (21b) est munie d'une seconde rainure à géométrie de bague (204) dans la direction circonférentielle, et une bague interne en métal (212) est montée dans la seconde rainure à géométrie de bague (204).

6. Connecteur d'admission de gaz selon la revendication 1, **caractérisé par le fait qu'**il comprend en outre une bague externe en métal (24), dans lequel la bague externe en métal (24) est emmanchée sur la partie de tête.

7. Connecteur d'admission de gaz selon la revendication 1, **caractérisé par le fait qu'**il comprend en outre un organe de connexion de conduit d'admission de gaz (25), dans lequel l'organe de connexion de conduit d'admission de gaz (25) est monté entre la partie de tête (21a) et le conduit principal d'admission de gaz (10).

8. Connecteur d'admission de gaz selon la revendication 7, **caractérisé en ce que** la partie de tête (21 a) est munie d'un filetage interne, une extrémité de l'organe de connexion de conduit d'admission de gaz (25) est munie d'un filetage externe, et la partie de tête (21a) est emmanchée sur l'extrémité de l'organe de connexion de conduit d'admission de gaz (25).

9. Connecteur d'admission de gaz selon la revendication 8, **caractérisé en ce que** l'autre extrémité de l'organe de connexion de conduit d'admission de gaz (25) est emmanchée sur le conduit principal d'admission de gaz (10).

10. Connecteur d'admission de gaz selon la revendication 1, **caractérisé en ce qu'**une extrémité de la partie de queue (22b) est munie d'une partie de connexion de conduit d'échappement de gaz (26), et le tuyau en caoutchouc (20) est emmanché sur la partie de connexion de conduit d'échappement de gaz (26).

11. Table de cuisson au gaz, **caractérisée par le fait qu'**elle comprend un connecteur d'admission de gaz (2) selon l'une quelconque des revendications 1 à 10.
